# EUROPÄISCHE PATENTSCHRIFT

(11) **EP 0 262 386 B1**
(45) Veröffentlichungstag und Bekanntmachung des Hinweises auf die Patenterteilung: **17.03.1993**
(21) Anmeldenummer: 87112313.9
(22) Anmeldetag: 25.08.1987
(51) Int. Cl.: C08G 12/12, C08G 12/32, C08G 14/06, C09J 161/34

(54) **Verfahren zur Herstellung von lagerstabilen, flüssigen Harnstoff-Formaldehyd-Leimharzen**
Process for the preparation of storage-stable liquid adhesives of urea-formaldehyde resins
Procédé de préparation de colles de résines urée formaldéhyde liquides, stables à la conservation

(30) Priorität: 30.08.1986 DE 3629601
(43) Veröffentlichungstag der Anmeldung: 06.04.1988
(73) Patentinhaber: BASF Aktiengesellschaft, 67063 Ludwigshafen (DE)
(72) Erfinder: Weber, Engelbert, D-6730 Neustadt (DE); Diem, Hans, Dr., D-6800 Mannheim 1 (DE); Muehlthaler, Wolfgang, D-6944 Hemsbach (DE); Matthias, Guenther, Dr., D-6710 Frankenthal (DE)

(56) Entgegenhaltungen:
- DD-A- 228 273
- PATENT ABSTRACTS OF JAPAN, Band 7, Nr. 61 (C-156)[1206], 15 März 1983; & JP-A-57 207 615 (MATSUSHITA DENKO K.K.) 20-12-1982

## Beschreibung

Die Erfindung betrifft ein Verfahren zur Herstellung von lagerstabilen, flüssigen Harnstoff-Formaldehyd-Leimharzen mit einem Molverhältnis Harnstoff : Formaldehyd zwischen 1:1,0 und 1:2,1 und einem Trockengehalt von 58-75 Gew.-%, bezogen auf das Gesamtgewicht des Leimharzes. Bei diesem Verfahren wird in an sich bekannter Weise aus Formaldehyd und Harnstoff, sowie gegebenenfalls Melamin und/oder Phenol, wobei Melamin und Phenol auch in Form von Vorkondensaten mit Formaldehyd vorliegen können, eine Kondensatlösung hergestellt, unter vermindertem Druck eingeengt und gegebenenfalls mit Harnstoff versetzt.

Die Herstellung von flüssigen Harnstoff-Formaldehyd-Leimharzen mit einem Molverhältnis von Harnstoff : Formaldehyd zwischen 1:1,0 und 1:2,1 ist bekannt und beispielsweise in der US-A-4 410 685 beschrieben. Bei der dort beschriebenen Arbeitsweise zur Herstellung der Leimharze kann man eine Kondensatlösung herstellen und anschließend unter vermindertem Druck einengen. Über die Art der Einengung der Kondensatlösung ist in der Druckschrift nichts ausgesagt, da dem bekannten Verfahren die Aufgabe zugrunde liegt, ein hydrolytisch stabiles Leimharz zu schaffen, d.h. ein Leimharz, welches eine geringere Formaldehyd-Emission aufweist. Andere Eigenschaften der Leimharze sind in der Druckschrift nicht angesprochen.

In der Literaturstelle A. Pizzi, Wood Adhesives, Marcel Dekker, Inc., Now York und Basel, 1983, Seiten 88 und 89, ist die Entfernung von überschüssigem Wasser unter Vakuum, beispielsweise bei 40°C, für Harnstoff-Formaldehyd-Kondensatlösungen beschrieben, welche beispielsweise ein Molverhältnis von Harnstoff : Formaldehyd von 1:1,8 aufweisen. Hierbei wird beispielsweise unter Vakuum destilliert, wobei eine teilweise Fortsetzung der Kondensationsreaktion stattfindet. Man kann gewünschtenfalls auch (vgl. Seite 94 der Literaturstelle) dem fertigen Leimharz noch freien Harnstoff zusetzen.

Über die Art der Vakuumdestillation ist nichts gesagt, zumal die Literaturstelle nur eine Übersicht über Holzklebstoffe im allgemeinen geben will.

Das Eindampfen von Kondensatlösungen nach dem Stand der Technik kann in verschiedener Weise erfolgen. So wird nach Ullmanns Enzyklopädie der technischen Chemie, 4. Auflage, Band 7, Seite 412 (1973) die Verwendung eines Röhrenverdampfers empfohlen. Nach der US-A-2 456 192, Spalte 3, Zeilen 42-55, kann man die Kondensatlösung einer Vakuumverdampfung in einem Entspannungsgefäß unter gleichzeitiger Kühlung durch die Verdampfung unterwerfen, wobei in diesen beiden Fällen die relativ lange Verweilzeit, je nach Füllungszustand, nachteilig ist, da hierdurch unkontrollierte Weiterkondensationsreaktionen des Leimharzes auftreten, was zu einer Verkürzung der Lagerfähigkeit führt.

Nach der DE-A-1 570 998 kann man Kondensatlösungen in einem nicht näher erläuterten Röhrenverdampfer unter Durchströmung der Rohre von unten nach oben, beispielsweise von 47 auf 66 % eindampfen.

Nach der US-A-2 729 616 kann man die Kondensatlösung durch eine im Reaktor angeordnete Heizspirale erwärmen und auf diese Weise konzentrieren. Die Druckschrift stellt jedoch fest (vgl. Spalte 3, Zeile 65 bis Spalte 4, Zeile 3), daß Harz auskristallisiert und die Rohrwandungen bedeckt, so daß eine periodische Reinigung erforderlich ist. Zur Lösung des Problems wird vorgeschlagen, die Heizspirale als gerades Rohr auszubilden, wozu die Reaktoreinheit entsprechend verlängert werden muß. Doch auch in diesem Falle werden Messer zum Abschälen von Ablagerungen an der Rohrwandung empfohlen, woraus der Schluß zu ziehen ist, daß auch bei dieser Arbeitsweise Ablagerungen unvermeidbar sind.

Die Bildung von Ablagerungen tritt bei sämtlichen der zuvor genannten Eindampfmethoden und -vorrichtungen ein. Sie könnten nur dann zufriedenstellend arbeiten, wenn es möglich wäre, eine relativ kleine Verweilzeit zu erzielen und wenn die Anlage fortwährend in Betrieb gehalten würde. Bei Unterbrechung des Durchsatzes, aber auch schon aufgrund der relativ langen Verweilzeit von Anteilen des jeweiligen Leimansatzes bilden sich unlösliche Niederschläge, die Harze werden hochviskos (über 4000 mPa.s, gemessen bei 20°C) und können mit den üblichen Förderapparaturen nicht mehr gepumpt oder verarbeitet werden. Außerdem wird die Gelierzeit verlängert, wodurch die Harze wenig reaktiv sind und bei Verwendung des Harzes zur Spanplattenherstellung diese mehr Zeit erfordert. Da überdies der Methylolgruppengehalt abfällt, vernetzen die Harze schlechter und die daraus gefertigten Spanplatten weisen höhere Quellwerte und niedrigere Festigkeiten auf.

Dadurch, daß die Verdampfer nach kurzer Laufzeit immer wieder gereinigt werden müssen, wird die Anlagekapazität verringert.

Fallfilmverdampfer sind in der Literatur beschrieben, vgl. "Verdampfen in Theorie und Praxis", Verlag Sauerländer, Aarau und Frankfurt am Main, Seiten 17, 170, 180 und 188 (1977). Diese werden typischerweise in der Milchindustrie, zur Eindickung von Fruchtsäften, zur Herstellung organischer Naturprodukte, wie z.B. Leim, Gerbeextrakt, usw., sowie zur Aufkonzentrierung von Glykol und Glycerin empfohlen. Zwar ist in der vorstehenden Aufzählung auch Leim erwähnt, als solcher aber als organisches Naturprodukt qualifiziert, d.h. ein Produkt, das ohne wesentliche Veränderung seiner Konstitution erwärmt werden kann. Nicht gemeint sind damit Harnstoff-Formaldehyd-Leimharze, von denen bekannt ist, daß sie unter Wärmeeinwirkung immer weiter reagieren, wobei man mit der Bildung von unlöslichen Polymerisaten bzw. Polykondensaten rechnen muß. Vor dem Einsatz organischer Produkte in den Fallfilmverdampfern wird im übrigen ausdrücklich gewarnt (Seite 188 der Literaturstelle), so daß nach dieser Lehre die Anwendung von Fallfilmverdampfern bei der Eindampfung von Harnstoff-Formaldehyd-Leimharzen ungeeignet erscheinen muß. Die Möglichkeit der Rezirkulation ist in der Druckschrift angesprochen, um das Teillastverhalten bei nicht sehr kritischen Produkten zu verbessern.

In der Literaturstelle "Grundlagen der Verfahrenstechnik für Ingenieure", VEB Deutscher Verlag für Grundstoffindustrie, Seite 203 (1981) wird bei der Besprechung der Filmverdampfung auf ein weiteres Problem hingewiesen, das darin besteht, daß die wandnahen Schichten besonders lange verweilen. Daraus muß man im Falle von Aminoharzen die Befürchtung ableiten, daß hier die Kondensation weiter geht, und man mit Mischungen aus hoch- und niedrigkondensierten Komponenten rechnen muß, was sich nachteilig auf die Lagerstabilität auswirkt.

Zur Eindampfung von Leimen und Gelatinen empfiehlt die Literaturstelle "Verdampfen, Kondensieren und Kühlen", M. Hirsch, Berlin 1931, Seite 322, eine sog. Vierkörper-Verdampferanlage, die überaus kompliziert aufgebaut und damit sehr kostspielig ist.

Der Erfindung liegt die Aufgabe zugrunde, ein Verfahren der eingangs genannten Art so auszugestalten, daß die Herstellung von Harnstoff-Formaldehyd-Leimharzen möglich ist, die lagerstabil sind, aber trotzdem bei guter Kaltklebrigkeit eine hohe Reaktivität (d.h. kurze Gelierzeit) aufweisen.

Diese Aufgabe wird gelöst mit einem Verfahren der eingangs genannten Art, das dadurch gekennzeichnet ist, daß man eine Kondensatlösung mit einem Trockengehalt von 38-55 Gew.-%, bezogen auf das Gesamtgewicht der Lösung, herstellt und durch Dünnschichtverdampfung, gegebenenfalls unter Zusatz einer wäßrigen Harnstofflösung auf einen Trockengehalt von 58-75 Gew.-% bringt, wobei man von der erhaltenen Produktlösung 10-60 Gew.-% in die Dünnschichtverdampfung rückführt. Im allgemeinen erhöht man so den Trockengehalt der Kondensatlösung um etwa 15 bis 25 Gew.%.

Nach einer bevorzugten Ausführungsform des Verfahrens führt man die Dünnschichtverdampfung mit Hilfe eines oder mehrerer in Stufen hintereinandergeschalteter oder parallelgeschalteter Fallfilmverdampfer durch. Hierbei ist besonders bevorzugt, in 2 oder 3 Stufen zu arbeiten und in jeder Stufe eingedampfte Produktlösung rückzuführen.

Besonders zweckmäßig betreibt man den bzw. die Fallfilmverdampfer bei einer mittleren Filmdicke von etwa 1 bis 2 mm (bevorzugt ungefähr 1,5 mm) und einer mittleren Verweilzeit zwischen 1 und 10 Minuten.

Die erforderliche Beheizung bei der Dünnschichtverdampfung läßt sich besonders bevorzugt mit Dampf von 2 bis 6 bar durchführen.

Besonders zweckmäßig dampft man die Kondensatlösung bei einer Temperatur zwischen 48 und 100°C ein. Dabei ist die Eintrittstemperatur höher als die Austrittstemperatur.

Nach einer weiteren bevorzugten Ausführungsform versetzt man den Rückführanteil der Produktlösung vor dem erneuten Eintritt in die Dünnschichtverdampfung mit einer wäßrigen Harnstofflösung. Besonders zweckmäßig ist die wäßrige Harnstofflösung 60 bis 70gew.%ig.

Man kann die Dünnschichtverdampfung zweckmäßig bei einem Druck von 850 bis 100 mbar, besonders vorteilhaft bei 300 bis 110 mbar durchführen, wobei der höhere Druck einer höheren Temperatur entspricht und umgekehrt.

Besonders zweckmäßig setzt man für die Dünnschichtverdampfung eine Kondensatlösung mit einem Trockengehalt von 40 bis 50 Gew.-%, insbesondere 45 bis 50 Gew.-%, ein. Die nach dem Eindampfen und gegebenenfalls Zusatz der Harnstofflösung erhaltene konzentrierte Lösung weist einen Trockengehalt von 58 bis 75 Gew.-%, bezogen auf das Gesamtgewicht des Leimharzes, auf. Bevorzugt weist sie 60 bis 68 Gew.-%, insbesondere ungefähr 66,5 Gew.-% Trockengehalt auf.

Der hier verwendete Begriff "Trockengehalt" oder "Feststoffgehalt" betrifft den nach dem Eindampfen einer entsprechenden Lösung verbliebenen Gehalt an Substanz (DIN 12605).

Die nach dem erfindungsgemäßen Verfahren erhältlichen Leimharze weisen überraschend eine sehr hohe Lagerstabilität auf, d.h. die Viskosität steigt bei der Lagerung nur sehr langsam an. Darüber hinaus ist die Kaltklebrigkeit ausgezeichnet, d.h. im Falle der Herstellung von Spanplatten hält der Spänekuchen schon vor der Härtung gut zusammen. Überraschend ist auch die Reaktivität, d.h. die Gelierzeit ist besonders kurz. Das führt auch zu einer kurzen Preßzeit.

Die unter Verwendung des erfindungsgemäß hergestellten Leimharzes erhältlichen Spanplatten weisen hohe mechanische Festigkeiten, ausgedrückt durch die Querzugsfestigkeit, auf. Die Quellbeständigkeit ist gut; die Spanplatten weisen nach Wässerung eine geringe Volumenvergrößerung durch Quellung auf. Außerdem ist die Formaldehydabspaltung bei der Herstellung der Spanplatten und aus den fertigen Platten und Werkstoffen sehr gering.

Beim Einengungsvorgang wird die verdünnte Harzlösung auf eine höhere Konzentration gebracht, gleichzeitig erfolgt durch die erhöhte Temperatur eine weitere Reaktion. Das ist auch der Fall, wenn die Temperatur durch Arbeiten im Vakuum abgesenkt ist. Daher ist eine kurze Verweilzeit wichtig. Hierbei ist nicht eine kurze mittlere Verweilzeit gemeint, vielmehr sollte die Verweilzeit für jedes Molekül vergleichbar kurz sein. Anderenfalls würde die Lagerbarkeit des Leimharzes verkürzt werden. Die Tatsache, daß durch Anwendung der Dünnschichtverdampfung, zweckmäßig im pH-Bereich von 6,5 bis 7,2, diese Forderung erfüllt wird und hierdurch lagerstabile Leimharze erzielt werden, die gleichzeitig eine hohe Reaktivität aufweisen, muß als überraschend bezeichnet werden. Das gilt insbesondere im Hinblick darauf, daß ein Teil der resultierenden Produktlösung in die Dünnschichtverdampfung rückgeführt wird, wodurch a priori mit sehr unterschiedlichen Verweilzeiten der einzelnen Moleküle gerechnet werden muß. Daß dennoch keine Abnahme der Lagerstabilität eintritt, war nicht vorherzusehen.

Für das erfindungsgemäße Verfahren erfolgt die Kondensation von Formaldehyd und Harnstoff sowie gegebenenfalls Melamin und/oder Phenol und anderen Zusätzen in an sich bekannter Weise. Derartige Arbeitsweisen, die zu den genannten Harnstoff-Formaldehyd-Leimharzen führen, sind im Stand der Technik beschrieben, vgl. beispielsweise EP 62 389. Allgemeine Arbeitsweisen zur Herstellung der Leimharze sind auch in der Lehrbuchliteratur beschrieben, vgl. die eingangs genannten Literaturstellen. Die gegebenenfalls mitverwendete Menge an Melamin beträgt insbesondere 2 bis 16, bevorzugt 3 bis 7 Gew.%. Sofern Phenol mitverwandt wird, ist die Menge meist unter 2 Gew.%. Das Endmolverhältnis Harnstoff:Formaldehyd beträgt im Verfahrensprodukt 1:0,8 bis 1:2,1, insbesondere 1:1,0 bis 1:2,1. Besonders bevorzugt ist nach der erfindungsgemäßen Arbeitsweise ein Endmolverhältnis Harnstoff : Formaldehyd zwischen 1:0,8 und 1:1,3 bzw. 1:1,0 und 1:1,22.

Die Rückvermischung durch Rückführen eines Teils der resultierenden Produktlösung erfolgt mit einer Menge von 10 bis 60 Gew.-% der Produktlösung. Bevor die rückzuführende Menge erneut in die Dünnschichtverdampfung eintritt, kann man ihr noch gewünschtenfalls Harnstofflösung zumischen. Wenn die Kondensatlösung am Eingang in den Verdampfer einen pH von beispielsweise 6,5 aufweist, steigt dieser im Verdampfer auf einen Wert von etwa 6,8.

Besonders geeignete Verdampfer sind sog. Sambay-Verdampfer oder Fallfilmverdampfer. Diese Verdampfer weisen einen nur geringen Hold-up auf und besitzen eine sog. Pfropfenströmungscharakteristik.

In den Zeichnungen sind vorteilhafte Ausführungsformen der Erfindung genauer erläutert. Hierbei bedeuten:
- Figur 1: eine schematische Darstellung des erfindungsgemäßen Verfahrens unter Verwendung eines Fallfilmverdampfers;
- Figur 2: eine schematische Darstellung der Vorgänge an der Rohrwandung des Fallfilmverdampfers gemäß Figur 1 und
- Figur 3: eine schematische Darstellung der Vorgänge an einem Fallfilmverdampfer, der ohne Rückführung von Produktlösung arbeitet.

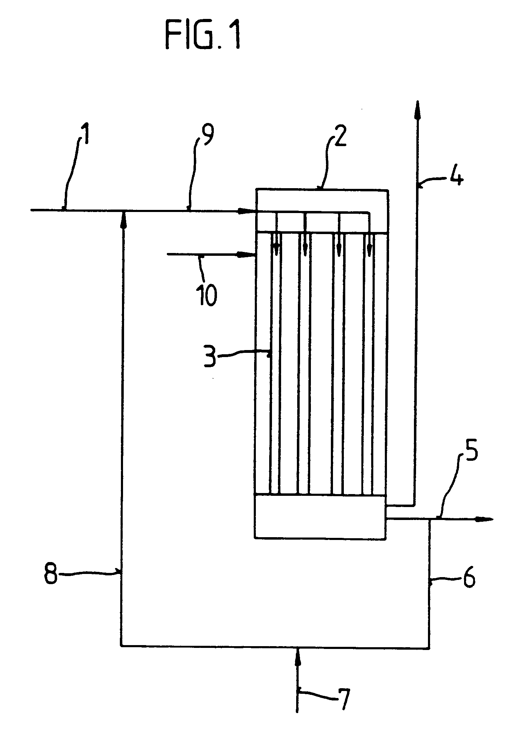

In Figur 1 ist mit 1 die Einspeisung einer Leimharz-Kondensatlösung aus einem nicht dargestellten Reaktor (gewünschtenfalls auch Reaktorkaskade) bezeichnet. Nach Vermischen mit rückgeführter Produktlösung in der Zuleitung 9 tritt die Kondensatlösung in den mit 2 bezeichneten Fallfilmverdampfer ein. Dieser ist mit Rohren 3 versehen, an deren Wandung die Kondensatlösung in Form eines Films nach unten fließt. Der Fallfilmverdampfer ist mit Dampf beheizt. Die Temperatur im Heizraum beträgt etwa 95°C. Über die Leitung 4, welche an ein Vakuum von etwa 90 mbar angeschlossen ist, werden die Brüden abgezogen. Diese werden in üblicher Weise weiterverarbeitet. Falls die Eindampfungsanlage aus mehreren hintereinandergeschalteten Stufen besteht, wird dieser als Brüden bezeichnete Dampf geteilt. Ein Teil wird zur Stufe 1 zurückgeführt, mit Frischdampf gemischt und zur Beheizung der Stufe 1 verwendet. Der zweite Teil wird zur Beheizung der zweiten Stufe, die aus einem aufgebauten Verdampfer besteht, verwendet. Die 2- oder 3-stufige Anlage ist bevorzugt. Der Einfachheit halber ist in der Abbildung nur 1 Stufe gezeichnet. Am unteren Ende des Fallfilmverdampfers tritt Produktlösung über die Leitung 5 aus. Bei 6 wird ein Anteil der Produktlösung für die partielle Rückführung abgezweigt. Gewünschtenfalls kann über eine Zuleitung 7 eine Harnstofflösung zugesetzt werden. Über die Leitung 8 fließt rückgeführte Produktlösung und Harnstofflösung dann wieder nach Durchgang durch die Leitung 9 in den Fallfilmverdampfer ein. 10 kennzeichnet den Dampfeinlaß.

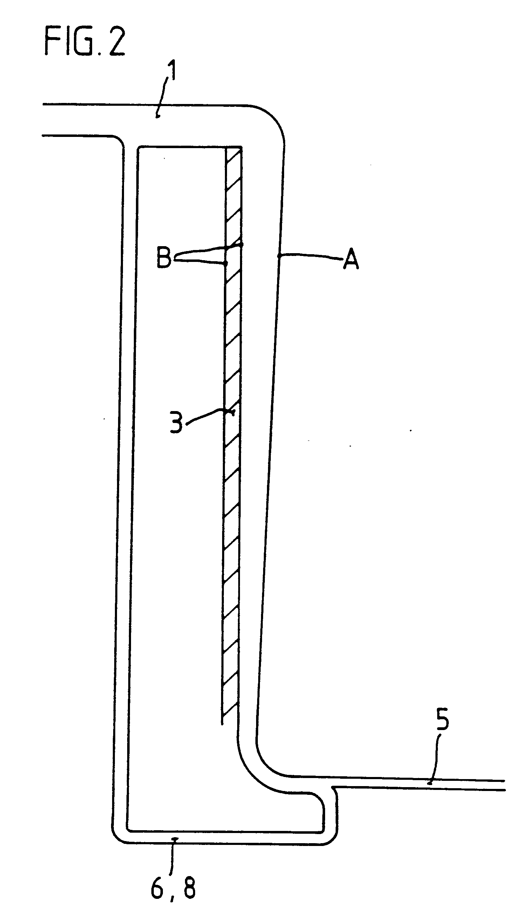

In der Figur 2 sind die Vorgänge beim Eindampfen der Kondensatlösung dargestellt. Bei 1 wird Kondensatlösung eingeleitet, welche an der Wandung 3 auf der Innenseite eines Rohres im Fallfilmverdampfer nach unten fließt. Durch zunehmende Verdampfung nimmt die Dicke des Flüssigkeitsfilms von oben nach unten graduell ab. Der Fallfilmverdampfer wird mit Dampf von etwa 90°C beheizt. An den Punkten B der Rohrwandung 3 beträgt die Temperatur 35 bis 90°C. Die Oberflächentemperatur des Leimfilms liegt beim Punkt A zwischen 35 und 70°C. Der Innendruck im Rohr kann beispielsweise zwischen 60 und 120 mbar liegen. Bei 5 wird eingeengte Produktlösung abgezogen. Die Rückführung erfolgt über die Leitung 6, 8.

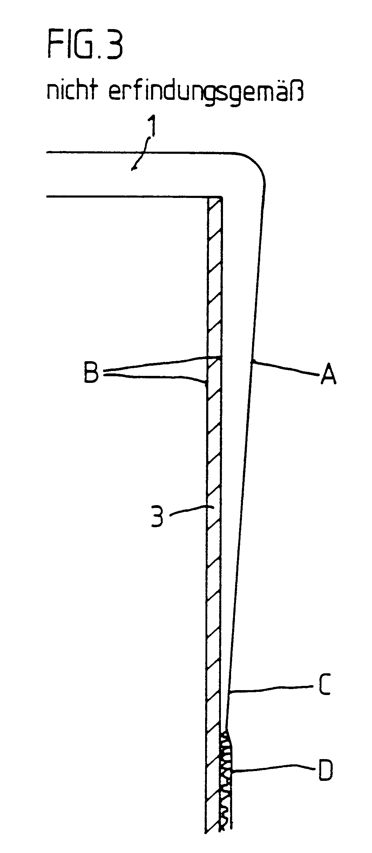

In der Figur 3 sind die Vorgänge dargestellt, welche sich bei einer Anordnung gemäß Figur 2 abspielen, wenn keine Rückführung für die Produktlösung vorgesehen ist. Bei 1 tritt die Kondensatlösung in den Fallfilmverdampfer ein und läuft unter den selben Bedingungen wie für Figur 2 genannt an der Rohrwandung nach unten. Wenn Variationen im Einlaß für die Kondensatlösung auftreten oder Temperaturführung bzw. Verweilzeit nicht genauestens gesteuert werden, erfolgt eine übermäßige Konzentrierung, so daß am Punkt C eine weitgehend eingedampfte Produktlösung vorliegt, die am Punkt D zähflüssig wird und Krusten bildet. Die am Auslauf zu geringe Schichtdicke und die damit verbundene teilweise Totaleindampfung führt zu einer drastischen Verschlechterung der Lagerfähigkeit des Produkts und erfordert eine häufige Reinigung des Verdampfers.

Die Erfindung wird durch das nachfolgende Beispiel weiter erläutert.

### Beispiel

### 1. Herstellung der Kondensatlösung (Primärlösung):

In die mittels Natronlauge auf pH 6,8 eingestellte Lösung von 165 Teilen einer 40%igen wäßrigen Formaldehydlösung werden 63 Teile Harnstoff in fester Form eingetragen. Die Mischung wird 10 Minuten bei ca. 82°C gehalten. Dabei findet die Methylolierung statt. Dann wird der pH-Wert mit 10%iger Ameisensäure auf 4,5 eingestellt. Danach steigt die Temperatur im Verlaufe einiger Minuten durch die Kondensation auf 98°C. Diese Temperatur wird ca. 30 Minuten gehalten, bis eine Mischung von 1 Teil Reaktionslösung und 5 Teilen Wasser beim Abkühlen bei 15°C weiß ausfällt (scharfer Umschlag). Dann wird die Reaktionsmischung mit 25%iger Natronlauge auf pH 8,5 gestellt.

Nun werden weitere 17 Teile Harnstoff zugegeben, so daß das Molverhältnis Formaldehyd zu Harnstoff 1,65 beträgt. Die so erhaltene Lösung hat einen Trockengehalt von 51,6 %.

### 2. Eindampfung

3000 Teilen Primärlösung mit einem Trockengehalt von 51,2 % werden 2190 Teilen Rückkreisungslösung, bestehend aus 865 Teilen Harnstoff-Formaldehyd-Harz, 608 Teilen Harnstoff und 717 Teilen Wasser zudosiert, und die resultierenden 5190 Teile Harzlösung werden auf den Fallfilmverdampfer geleitet. Dieser enthält 630 Rohre von 30 mm Innendurchmesser, die mit einem Dampfgemisch mit einer Temperatur von 95°C beheizt werden. Es verdampfen 699 Teile Wasser bei einem Vakuum von durchschnittlich 0,6 bar. Die eingeengte Lösung hat eine Temperatur von 50°C; es handelt sich um 4491 Teile Lösung, enthaltend 2471 Teile Harz, 538 Teile Harnstoff und 1482 Teile Wasser, also 67,0 % Trockengehalt. 35 % dieser Lösung, 1572 Teile, werden abgezweigt, mit 618 Teilen einer 68%igen Harnstofflösung versetzt, und die resultierende Mischung wird an den Eintritt zum Verdampfer zurückgeführt.

Die erhaltene Lösung, 2919 Teile, besteht aus 1606 Teilen Harz, 350 Teilen Harnstoff und 963 Teilen Wasser entsprechend einem Trockengehalt von 67 %. Das Harz weist folgende Eigenschaften auf: Das Molverhältnis Harnstoff:Formaldehyd beträgt 1:1,10. Die Gelierzeit, bestimmt nach Zusatz von 10 % einer 15%igen wäßrigen Ammoniumchloridlösung, bei 100°C, beträgt 38 Sekunden. Die Anfangsviskosität unmittelbar nach der Leimharzherstellung beträgt 565 mPa.s. Die Lagerbarkeit bei 20°C, deren Ende von uns bei Erreichen einer Viskosität von 2400 mPa.s, gemessen bei 20°C, festgelegt wurde, betrug 90 Tage. Eine zweite Probe der gleichen Lösung wies eine Lagerbarkeit von 94 Tagen auf.

### Vergleichsbeispiel

Bei einem, wie im Beispiel beschrieben, jedoch ohne Rückkreisung der Produktlösung ausgeführten Versuch wurden 3618 Teile Primärlösung nach Zumischung von 618 Teilen einer 68%igen wäßrigen Harnstofflösung dem Fallfilmverdampfer zugeführt. Die weiteren Verfahrensschritte sind die gleichen wie in Beispiel 1 angegeben. Das resultierende Leimharz hatte eine Gelierzeit von 49 Sekunden bei 100°C, seine Lagerstabilität betrug bis zum Erreichen von 2400 mPa.s nur 29 Tage.

## Patentansprüche

1. Verfahren zur Herstellung von lagerstabilen, flüssigen Harnstoff-Formaldehyd-Leimharzen mit einem Molverhältnis Harnstoff : Formaldehyd zwischen 1:0,8 und 1:2,1 und einem Trockengehalt von 58-75 Gew.-%, bezogen auf das Gesamtgewicht des Leimharzes, bei dem in an sich bekannter Weise aus Formaldehyd und Harnstoff, sowie gegebenenfalls Melamin und/oder Phenol, wobei Melamin und Phenol auch in Form von Vorkondensaten mit Formaldehyd vorliegen können, eine Kondensatlösung hergestellt, gegebenenfalls unter vermindertem Druck, eingeengt und gegebenenfalls mit Harnstoff versetzt wird, dadurch gekennzeichnet, daß man eine Kondensatlösung mit einem Trockengehalt von 38-55 Gew.-%, bezogen auf das Gesamtgewicht der Lösung, herstellt und durch Dünnschichtverdampfung eindampft wobei man sie, gegebenenfalls unter Zusatz von wäßriger Harnstofflösung, auf einen Trockengehalt von 58-75 Gew.-% bringt, und wobei man von der erhaltenen Produktlösung 10-60 Gew.-% in die Dünnschichtverdampfung rückführt.

2. Verfahren nach Anspruch 1, dadurch gekennzeichnet, daß man die Dünnschichtverdampfung mit Hilfe eines oder mehrerer, in Stufen hintereinandergeschalteter oder parallelgeschalteter Fallfilmverdampfer durchführt.

3. Verfahren nach Anspruch 2, dadurch gekennzeichnet, daß man beim Eindampfen in zwei oder drei Stufen arbeitet und in jeder Stufe Produktlösung rückführt.

4. Verfahren nach einem der Ansprüche 2 oder 3, dadurch gekennzeichnet, daß man den bzw. die Fallfilmverdampfer bei einer mittleren Filmdicke von etwa 1 bis 2 mm und einer mittleren Verweilzeit zwischen 1 und 10 Minuten betreibt.

5. Verfahren nach einem der Ansprüche 1 bis 4, dadurch gekennzeichnet, daß man die Beheizung der Dünnschichtverdampfung mit Dampf von 2 bis 6 bar durchführt.

6. Verfahren nach einem der Ansprüche 1 bis 5, dadurch gekennzeichnet, daß man die Kondensatlösung bei einer Temperatur zwischen 48 und 100°C eindampft.

7. Verfahren nach einem der Ansprüche 1 bis 6, dadurch gekennzeichnet, daß man den Rückführ-Anteil der Produktlösung vor dem erneuten Eintritt in die Dünnschichtverdampfung mit einer 60 bis 70gew.%igen, wäßrigen Harnstofflösung versetzt.

8. Verfahren nach einem der Ansprüche 1 bis 7, dadurch gekennzeichnet, daß man die Dünnschichtverdampfung bei 850 bis 100 mbar durchführt.

9. Verfahren nach einem der Ansprüche 1 bis 8, dadurch gekennzeichnet, daß man für die Dünnschichtverdampfung eine Kondensatlösung mit einem Trockengehalt von 40 bis 50 Gew.-% einsetzt und eine Produktlösung mit einem Trockengehalt von 60 bis 68 Gew.-% herstellt.

10. Verfahren nach einem der Ansprüche 1 bis 9, dadurch gekennzeichnet, daß das Molverhältnis Harnstoff:Formaldehyd im resultierenden Leimharz 1:1,0 bis 1:2,1 ist.

11. Verfahren nach einem der Ansprüche 1 bis 9, dadurch gekennzeichnet, daß das Molverhältnis Harnstoff:Formaldehyd im resultierenden Leimharz 1:0,8 bis 1:1,3 ist.

## Claims

1. A process for the preparation of liquid urea/formaldehyde resin glues having a long shelf life, a molar ratio of urea to formaldehyde of from 1 : 0.8 to 1 : 2.1 and a solids content of 58-75% by weight, based on the total weight of the resin glue, in which a condensate solution is prepared in a conventional manner from formaldehyde and urea and, if required, melamine and/or phenol, where melamine and phenol may also be in the form of precondensates with formaldehyde and, if required, is evaporated down under reduced pressure and, if necessary, urea is added, wherein a condensate solution having a solids content of 38-55% by weight, based on the total weight of the solution is prepared and is evaporated down in a thin-film evaporator, said solution being brought to a solids content of 58-75% by weight, if necessary with the addition of an aqueous urea solution, and 10-60% by weight of the resulting product solution being recycled to the thin-film evaporator.

2. A process as claimed in claim 1, wherein the evaporation in the thin-film evaporator is carried out with the aid of one or more falling-film evaporators connected in stages in series or in parallel.

3. A process as claimed in claim 2, wherein evaporation is carried out in two or three stages and product solution is recycled in each stage.

4. A process as claimed in claim 2 or 3, wherein the falling-film evaporator or evaporators is or are operated with an average film thickness of from about 1 to 2 mm and an average residence time of from 1 to 10 minutes.

5. A process as claimed in any of claims 1 to 4, wherein heating during evaporation in the thin-film evaporator is carried out using steam at from 2 to 6 bar.

6. A process as claimed in any of claims 1 to 5, wherein the condensate solution is evaporated down at from 48 to 100°C.

7. A process as claimed in any of claims 1 to 6, wherein the recycled amount of the product solution is mixed with a 60-70% strength by weight, aqueous urea solution before reentering the thin-film evaporator.

8. A process as claimed in any of claims 1 to 7, wherein evaporation in the thin-film evaporator is carried out at from 850 to 100 mbar.

9. A process as claimed in any of claims 1 to 8, wherein a condensate solution having a solids content of from 40 to 50% by weight is used for evaporation in the thin-film evaporator, and a product solution having a solids content of from 60 to 68% by weight is prepared.

10. A process as claimed in any of claims 1 to 9, wherein the molar ratio of urea to formaldehyde in the resulting resin glue is from 1 : 1.0 to 1 : 2.1.

11. A process as claimed in any of claims 1 to 9, wherein the molar ratio of urea to formaldehyde in the resulting resin glue is from 1 : 0.8 to 1 : 1.3.

## Revendications

1. Procédé de préparation de colles de résines urée formaldéhyde liquides avec un rapport molaire urée/formaldéhyde compris entre 1:0,8 et 1:2,1 et une teneur en matière sèche de 58 à 75% en poids, calculée sur le poids total de colle de résine, dans lequel une solution de condensation est préparée éventuellement sous pression réduite, à partir de formaldéhyde et d'urée, ainsi qu'éventuellement de mélamine et/ou de phénol, la mélamine et le phénol pouvant également se présenter sous la forme de précondensats avec le formaldéhyde, est concentrée et est éventuellement mélangée à de l'urée, caractérisé en ce qu'on prépare une solution de condensation avec une teneur en matière sèche de 38 à 55% en poids, calculée sur le poids total de la solution et on l'évapore par évaporation à couche mince, dans laquelle on améne la solution, éventuellement additionnée d'une solution aqueuse d'urée, à une teneur en matière sèche de 58 à 75% en poids et on recycle 10 à 60% en poids de la solution de produit obtenue dans l'évaporation à couche mince.

2. Procédé suivant la revendication 1, caractérisé en ce qu'on réalise l'évaporation à couche mince su moyen d'un ou de plusieurs évaporateurs à ruissellement montés par étapes l'un derrière l'autre ou en parallèle.

3. Procédé suivant la revendication 2, caractérisé en ce qu'on travaille par évaporation en deux on trois étapes et dans chaque étape, on recycle de la solution du produit.

4. Procédé suivant l'une des revendications 2 ou 3, caractérisé en ce qu'on conduit l'évaporateur, respectivement les évaporateurs à ruissellement, avec une épaisseur de film moyen d'environ 1 à 2 mm et avec un temps de séjour compris entre 1 et 10 minutes.

5. Procédé suivant l'une des revendications 1 à 4, caractérisé en ce qu'on effectue le chauffage de l'évaporation à couche mince au moyen de vapeur de 2 à 6 bars.

6. Procédé suivant l'une des revendications 1 à 5, caractérisé en ce qu'on évapore la solution de condensation à une température comprise entre 48 et 100°C.

7. Procédé suivant l'une des revendications 1 à 6, caractérisé en ce qu'on mélange la quantité à recycler de la solution de produit, avant la réadmission dans l'évaporation à couche mince, avec une solution aqueuse d'urée à 60 à 70% en poids.

8. Procédé suivant l'une des revendications 1 à 7, caractérisé en ce qu'on effectue l'évaporation à couche mince à une pression de 850 à 100 mbars.

9. Procédé suivant l'une des revendications 1 à 8, caractérisé en ce que, pour l'évaporation à couche mince, on emploie une solution de condensation avec une teneur en matière sèche de 40 à 50% en poids et on produit une solution de produit avec une teneur en matière sèche de 60 à 68% en poids.

10. Procédé suivant l'une des revendications 1 à 9, caractérisé en ce que le rapport molaire urée/formaldéhyde de la colle de résine obtenue est de 1:1,0 à 1:2,1.

11. Procédé suivant l'une des revendications 1 à 9, caractérisé en ce que le rapport molaire urée/formaldéhyde de la colle de résine obtenue est de 1:0,8 à 1:1,3.
